# EUROPÄISCHE PATENTSCHRIFT

(11) **EP 3 512 747 B1**
(45) Veröffentlichungstag und Bekanntmachung des Hinweises auf die Patenterteilung: **26.01.2022**
(21) Anmeldenummer: 17784528.6
(22) Anmeldetag: 08.09.2017
(51) Int. Cl.: B60W 50/00, B60W 50/08, B60W 10/06, B60W 10/10, B60W 10/22, B60W 30/18, A62C 27/00

(54) **BETRIEBSVERFAHREN FÜR EIN EINSATZFAHRZEUG**
OPERATING METHOD FOR AN EMERGENCY VEHICLE
PROCÉDÉ PERMETTANT DE FAIRE FONCTIONNER UN VÉHICULE D'INTERVENTION

(30) Priorität: 13.09.2016 AT 508122016
(43) Veröffentlichungstag der Anmeldung: 24.07.2019
(73) Patentinhaber: Rosenbauer International AG, 4060 Leonding (AT)
(72) Erfinder: KLUCSARITS, Anton, 4115 Kleinzell i.M. (AT); PENZ, Edmund, 4020 Linz (AT); RONACHER, Alexander, 4063 Hörsching (AT); ZAUNER, Stefan, 4113 St. Martin i.M. (AT)
(74) Vertreter: Burger, Hannes
(86) Internationale Anmeldenummer: PCT/AT2017/060218
(87) Internationale Veröffentlichungsnummer: WO 2018/049443

(56) Entgegenhaltungen:
- EP-A1- 1 355 209
- DE-A1- 10 162 866
- US-A- 5 736 925
- US-A1- 2004 002 794

## Beschreibung

Die Erfindung betrifft ein Betriebsverfahren für ein Einsatzfahrzeug, insbesondere für ein Feuerwehrfahrzeug.

Stark vereinfacht lassen sich für Einsatzfahrzeuge mindesten zwei wesentliche Betriebsarten festlegen. Da ist einmal der gewöhnliche Fahrbetrieb, bei dem das Einsatzfahrzeug auf öffentlichen und auch privaten Fahrwegen bewegt wird. Hier wird das Einsatzfahrzeug hinsichtlich der Fahrdynamik, insbesondere der angestrebten Fahrgeschwindigkeit, innerhalb der allgemein gültigen Rahmenbedingungen gemäß der Straßenverkehrsordnung bewegt. Hierunter fällt bspw. auch die Rückfahrt von einem Einsatz.

Im Gegensatz dazu steht eine zweite Betriebsart, bei der sich das Einsatzfahrzeug im Einsatz befindet und wobei möglichst schnell der Einsatzort erreicht werden soll und dann bei Erreichen des Einsatzortes, möglichst schnell die Einsatzbereitschaft hergestellt werden soll. Dazu ist es erforderlich, dass sich das Einsatzfahrzeug mit hoher Geschwindigkeit dem Einsatzort nähert und nach Stopps bzw. nach Langsamfahrten, möglichst schnell die Einsatzgeschwindigkeit erreicht. Bei einem Feuerwehrfahrzeug, insbesondere einem Löschfahrzeug, ist bei einer Einsatzfahrt zumeist auch der Wassertank gefüllt, sodass das Einsatzfahrzeug entsprechend schwer ist und der Schwerpunkt des Einsatzfahrzeuges recht hoch liegen wird. Ein Feuerwehrfahrzeug kann bspw. auch mit einer Drehleiter ausgestattet sein, wodurch sich meist eine besondere Fahrzeuglänge und ebenfalls ein hoch liegender Schwerpunkt ergibt. Hohe Schwerpunktlage und/oder Fahrzeuglänge bzw. Gewicht wirken sich negativ auf die Fahrdynamik aus, wobei insbesondere der hoch liegende Schwerpunkt für Instabilität bei schnellen Kurvenfahrten bzw. Lastwechseln führen kann.

Beim Anfahren und auch beim Erreichen des Einsatzortes sind vom Fahrer des Einsatzfahrzeuges mehrere Aktionen möglichst rasch, jedoch in einer zumeist vorgegebenen Reihenfolge durchzuführen, um die Einsatzbereitschaft herzustellen. Für den Fahrer des Einsatzfahrzeuges führt diese Vielzahl an Tätigkeiten, die dieser neben dem eigentlichen Lenken des Einsatzfahrzeuges zu erledigen hat, zu einer deutlichen Anspannung, was zusätzlich zur Anspannung aufgrund der Einsatzfahrt, zu einem deutlichen Stress führen kann. Der Einsatzfahrer muss sich um ein Navigationssystem, ein Fahrdynamiksystem, ein Einsatzleitsystem, ein Löschmittelversorgungssystem oder ein System für technische Einsätze, ein Einsatzstellenbeleuchtungssystem und dergleichen kümmern. Im Einsatzfall kann es nun stressbedingt dazu kommen, dass der Fahrer durch die vielfältigen Nebenaufgaben zu stark abgelenkt wird, was zu einer Gefährdung der Einsatzkräfte, die im Einsatzfahrzeug mitfahren, bzw. anderer Verkehrsteilnehmer führen kann. Ferner können die Konfigurationserfordernisse die Abfahrt zum Einsatzort bzw. die Einsatzbereitschaft am Einsatzort verzögern.

Aus dem Stand der Technik sind nun einzelne isolierte Systeme bekannt, welche abgeschlossene Teilaufgaben übernehmen. Beispielsweise offenbart die DE 10 2015 035 90 A1 ein Verfahren und ein System zur Niveauregulierung bei einem Fahrzeug. Dabei wird eine Ausrichtung des Fahrzeuges ermittelt und Niveauregulierungselemente angesteuert, um die Ausrichtung eines Fahrzeuges in einer definierten Relation zum Fahruntergrund zu halten.

Die US 2004/0002794 A beschreibt ein elektronisches Steuersystem für ein Fahrzeug, welches mehrere Eingabegeräte, mehrere Ausgabegeräte, ein Kommunikationsnetzwerk und mehrere Schnittstellenmodule umfasst. Die Vielzahl von Eingabegeräten umfasst ein erstes Eingabegerät, das Informationen bezüglich einer Winkelposition eines ersten Fahrzeugrads bereitstellt. Die mehreren Ausgabevorrichtungen umfassen einen Aktuator, der in der Lage ist, eine oder beide der Winkelpositionen des ersten Fahrzeugrads oder einer Winkelposition eines zweiten Fahrzeugrads einzustellen. Die Vielzahl von Schnittstellenmodule sind mikroprozessorbasiert und sind über das Kommunikationsnetz miteinander verbunden. Die Schnittstellenmodule sind mit mehreren Eingabegeräten und mehreren Ausgabegeräten gekoppelt. Die Vielzahl von Schnittstellenmodulen umfasst ein oder mehrere Schnittstellenmodule, die mit der ersten Eingabevorrichtung und dem Aktuator gekoppelt sind. Das elektronische Steuersystem ist so konfiguriert, um die Winkelposition eines oder beider der ersten und zweiten Fahrzeugräder als Funktion der Informationen von der ersten Eingabevorrichtung zu steuern. Ein Umschalten zwischen unterschiedlichen Arten des Fahrbetriebs von Einsatzfahrzeugen ist nicht vorgesehen.

Aus der US5736925 A beschreibt ein Fahrzeug mit einer Fahrzeugwarn-Steuerung, wobei das Fahrzeug eine Energiequelle und mehrere Anordnungen von Meldevorrichtungen umfasst, die um die Peripherie des Fahrzeugs herum installiert sind. Die Steuerung umfasst ein Bedienermodul und ein zentrales Steuermodul. Das Bedienermodul umfasst einen Modusauswahlschalter, welcher mit der Energiequelle in Kommunikationsverbindung steht. Der Modusauswahlschalter ist zwischen einer primären und einer sekundären Moduseinstellung umschaltbar. Das zentrale Steuermodul umfasst seinerseits einen Prozessor, welcher mit dem Bedienermodul in Kommunikationsverbindung steht, und einen mit dem Prozessor in Kommunikationsverbindung stehenden Anzeigetreiber. Der Prozessor ist derart ausgebildet, um bei eingestellter primärer Moduseinstellung ein vorbestimmtes erstes Muster von Signalen zu generieren, und wobei der Prozessor bei eingestellter sekundärer Moduseinstellung ein vorbestimmtes zweites Muster von Signalen generiert. Der Anzeigetreiber ist dazu ausgebildet, bei Erhalt des ersten Muster von Signalen ein erstes Blinkmuster an den Meldevorrichtungen anzuzeigen und bei Erhalt des zweiten Musters von Signalen ein zweites Blinkmuster an den Meldevorrichtungen anzuzeigen. Jede der Meldevorrichtungen umfasst ein stroboskopisches Lampenpaar und ein Glühlampenpaar. Es ist auch hier kein Umschalten zwischen unterschiedlichen Fahrbetriebsarten des Einsatzfahrzeugs vorgesehen.

Aus der EP 1355209 A1 ist ein Fahrzeugsteuersystem zum Steuern mehrerer Fahrzeuguntersysteme bekannt geworden, von denen jedes in mehreren Untersystem-Konfigurationsmodi betrieben werden kann. Das Fahrzeugsteuersystem ist seinerseits in mehreren Fahrmodi betreibbar, in denen jeweils die Untersystem-Konfigurationsmodi in Abhängigkeit von der jeweiligen Fahroberfläche, auf denen sich das Fahrzeug bewegt, ausgewählt werden können. Der auszuwählende Fahrmodus ist lediglich von der Oberflächenbeschaffenheit des jeweiligen Untergrunds, auf dem sich das Fahrzeug bewegt, auszuwählen und nicht von der Art des jeweilig durchzuführenden Fahrbetriebs des Einsatzfahrzeugs.

Die DE 10162866 A1 beschreibt ein Führungssystem für ein Kraftfahrzeug, welches ohne die Mitwirkung des Fahrers entscheidende Parameter für die Fahrzeugbewegung beeinflusst. Das Führungssystem ist mit einem Verkehrsleitsystem verbindbar und weist Einrichtungen zur Steuerung und/oder Regelung des Fahrzeugführungsverhaltens auf. Die Steuerung und/oder Regelung des Fahrzeugführungsverhaltens erfolgt vom Startort zum Zielort ganz oder teilweise automatisch.

Auch aus der WO 08/083775 A2 ist ein ähnliches System bekannt, mit welchem die Ausrichtung eines Fahrzeugs bezüglich des Grundniveaus geändert werden kann.

Hinsichtlich einer einstellbaren Fahrdynamik beschreibt beispielsweise die WO 15/062794 A3 ein Schaltgetriebe mit verschiedenen Stufen für verschiedene Fahrprogramme.

Aus der WO 03/055714 A1 ist ein Steuerungssystem für ein Elektrofahrzeug bekannt, welches ein Kommunikationsnetzwerk aufweist, und wobei ferner die elektrischen Antriebsmotoren mit dem Kommunikationsnetzwerk verbunden sind.

Ferner sind aus dem Stand der Technik Systeme für Einsatzfahrzeuge bekannt, die einem Maschinisten eines Löschfahrzeugs dabei unterstützen, die Löschanlage zu bedienen.

Alle vorbekannten Systeme sind jedoch abgeschlossene Einheiten und als solche darauf ausgerichtet, die jeweilige Funktionalität ganz spezifisch bereit zu stellen. Dem Fahrer eines Einsatzfahrzeuges obliegt es weiterhin, sich um die korrekte Parametrierung und Aktivierung der einzelnen Systeme zu kümmern, was einen vorhandenen Stresspegel nicht oder nur unwesentlich senkt. Aus dem Stand der Technik ist kein System bekannt, welches einem Einsatzfahrer

### Weiter im Urtext auf Seite 3!

bzw. einem mitfahrenden Einsatzleiter, bei den teilweise komplexen und zeitkritischen Konfigurationsschritten unterstützt bzw. diese soweit als möglich automatisch durchführt.

Als Einzellösungen sind die aus dem Stand der Technik bekannten Systeme und Verfahren zumeist dahingehend optimiert, die jeweils gewünschte bzw. geforderte Funktionalität bestmöglich bereitzustellen. Eine Unterstützung des Einsatzfahrers im Hinblick auf die erforderlichen Konfigurationshandlungen bei den verschiedenen Betriebsarten eines Einsatzfahrzeuges ist aus dem Stand der Technik nicht bekannt.

Die Aufgabe der Erfindung liegt nun darin ein Verfahren zu schaffen, welches insbesondere einen Fahrer eines Einsatzfahrzeuges dahingehend unterstützt, dass sich dieser voll und ganz auf das Lenken des Fahrzeuges konzentrieren kann, ohne durch eine Einsatzkonfiguration abgelenkt zu werden.

Diese Aufgabe wird durch ein Betriebsverfahren für ein Einsatzfahrzeug, insbesondere für ein Feuerwehrfahrzeug gelöst. Das Einsatzfahrzeug weist eine Fahrzeugkarosserie, eine Antriebseinheit, mit zumindest einem Antriebsmotor und einer Motorsteuerung, zumindest ein Vorderradpaar und zumindest ein Hinterradpaar, zumindest ein Einsatzaggregat, und eine Signalisierungs- und Lichtabgabevorrichtung auf. Das Vorderradpaar und das Hinterradpaar sind jeweils über eine Aufhängvorrichtung mit einer Niveauregulierung mit der Fahrzeugkarosserie verbunden, ferner ist zumindest das Hinterradpaar mit dem Antriebsmotor verbunden. Das Einsatzaggregat ist mit dem Antriebsmotor verbunden, oder weist einen Aggregat-Antriebsmotor auf. Ferner umfasst das Einsatzfahrzeug eine Betriebsartensteuerung, welche einen Betriebsartenwahlschalter mit mehreren wählbaren Betriebsarten und ein Speichermittel mit darin hinterlegten Betriebsdatensätzen auf. Unter Betriebsdatensätzen werden all jene Datensätze verstanden, die spezifische Konfigurationsparameter einer Betriebsart, für jeweils ein Modul des Einsatzfahrzeugs umfassen.

Von einer Ablaufsteuerung der Betriebsartensteuerung wird bei Wahl einer ersten Betriebsart, welche einer Einsatzfahrt entspricht, ein erster Motorsteuerungs-Datensatz aus dem Speichermittel an die Motorsteuerung übertragen, und ein erster Aufhängungssteuerungs-Datensatz aus dem Speichermittel an die Aufhängvorrichtung übertragen, und ein erster Signalisierungs-Datensatz aus dem Speichermittel an die Signalisierungs- und Lichtabgabevorrichtung übertragen. Die übertragenen Datensätze werden daraufhin aktiviert.

Bei Wahl einer zweiten Betriebsart, welche einem Einsatzmodus entspricht, werden die übertragenen Datensätze der ersten Betriebsart deaktiviert, und ein zweiter Motorsteuerungs-Datensatz aus dem Speichermittel an die Motorsteuerung übertragen, ein zweiter Aufhängungssteuerungs-Datensatz aus dem Speichermittel an die Aufhängvorrichtung übertragen, und ein zweiter Signalisierungs-Datensatz aus dem Speichermittel an die Signalisierungs- und Lich-tabgabevorrichtung übertragen, und ein erster Einsatzaggregat-Datensatz an das Einsatzaggregat übertragen. Die übertragenen Datensätze werden daraufhin aktiviert.

Bei Wahl einer dritten Betriebsart, welche einem Standard-Betriebsmodus entspricht, werden die übertragenen Datensätze der ersten, zweiten, oder ggf. weiteren Betriebsart deaktiviert.

Durch diese Ausbildungen ist gewährleistet, dass bei einem Einsatz, vorbereitende bzw. nötige Einstellungsarbeiten am Betriebsverhalten des Einsatzfahrzeugs nach Wahl der Betriebsart, bspw. durch den Fahrer, automatisch, vollständig und in der richtigen Reihenfolge durchgeführt werden. Im Weiteren wird vereinfacht vom Fahrer gesprochen, wobei auch ein mitfahrender Einsatzleiter, oder eine andere Einsatzkraft im Einsatzfahrzeug die Betriebsartenwahl durchführen kann.

In der ersten Betriebsart kommt es auf möglichst schnelles Erreichen des Einsatzorts an. Hier muss das Einsatzfahrzeug auf maximale Leistung getrimmt werden. Beim Einsatzfahrzeug kann es sich bspw. um ein Löschfahrzeug handeln, dass bei der Einsatzfahrt mit vollem Tank, und damit entsprechend schwer unterwegs ist. Dementsprechend wird vom Antriebsmotor eine hohe Leistung gefordert, um das Fahrzeug immer wieder schnell beschleunigen zu können. Da am Einsatzweg meist auch Kurvenfahrten erforderlich sind, muss auch die Aufhängung der Räder, insbesondere die Dämpfung, auf die schnelle Kurvenfahrt mit einem hoch liegenden Fahrzeugschwerpunkt eingestellt sein, um eine gefährliche Seitenneigung zu minimieren. Ein Verlust des Fahrkomforts bzw. ein Betrieb des Antriebsmotors im Grenzlastbereich wird hier in Kauf genommen.

In der zweiten Betriebsart, bei Erreichen des Einsatzorts bzw. am Einsatzort, ist es erforderlich, möglichst schnell die Einsatzbereitschaft des Fahrzeugs bzw. der mittransportierten Mannschaft zu gewährleisten. Hierzu ist oftmals eine Vielzahl von Einstellungen erforderlich. Durch die vorteilhafte Ausführung ist nun gewährleistet, dass in der, auch bei routinierten Einsatzkräften durchaus vorhandenen Hektik, kein Schritt übersehen wird und dass zusätzlich die Einsatzbereitschaft schneller hergestellt ist.

Nach Beendigung des Einsatzes ist es von Vorteil, wenn sichergestellt ist, dass in der dritten Betriebsart alle getroffenen Einstellungen wieder auf Normalbetrieb zurückgesetzt werden.

Unter der ersten Betriebsart bzw. dem Einsatzmodus werden all jene Abläufe und Handlungen zusammengefasst, die erforderlich sind, um mit dem Einsatzfahrzeug möglichst schnell vom Stützpunkt zum Einsatzort zu gelangen. Ein wesentlicher Teil davon wird die Anfahrt betreffen. Die Anfahrt kann bspw. Autobahnstrecken, Innenstadtwege, Landstraßen, Bergstraßen und/oder schlecht oder unbefestigte Wege umfassen. Bei allen Wegen gilt es, möglichst schnell und verkehrssicher unterwegs zu sein. Hinsichtlich der Betriebsdatensätze bedeutet dies, dass sich die Parameter der Betriebsdatensätze für eine Fahrt über einen Autobahnabschnitt deutlich von jenen unterschieden werden, wenn das Einsatzfahrzeug auf einem schlecht befestigten Bergweg unterwegs ist.

Unter der zweiten Betriebsart wird der Einsatzmodus am Einsatzort verstanden. Hier ist es natürlich sehr wohl von Bedeutung, ob es sich bspw. um einen Löscheinsatz mit Wasser handelt, oder mit Speziallöschmittel ein Brand in einem Industriebetrieb zu löschen ist. Auch werden die Betriebsdatensätze unterschiedliche parametriert sein, wenn der Einsatz im Winter stattfindet. Auch bei technischen Einsätzen wird es Unterschiede in der Parametrierung der Betriebsdatensätze geben, die auf den jeweiligen Einsatzfall abgestimmt sind.

Nach einer Weiterbildung ist vorgesehen, dass das Hinterradpaar über ein Getriebe mit dem Antriebsmotor verbunden ist, und dass in der ersten Betriebsart ein erster Getriebesteuerungs-Datensatz aus dem Speichermittel an das Getriebe übertragen wird. Bei modernen Lastfahrzeugen, bzw. Einsatzfahrzeugen sind automatische Getriebe sehr weit verbreitet, um eine gute Anpassung des Antriebsmotors an den Reifensatz zu erreichen. Getriebesteuerungen sind nun derart ausgelegt, dass jeweils im optimalen Leistungs- bzw. Drehmomentbereich des Antriebsmotors geschaltet wird. Da es bei der Einsatzfahrt jedoch auf Geschwindigkeit ankommt, wird in der ersten Betriebsart die Schaltkennlinie des Getriebes derart parametriert, dass möglichst spät geschaltet wird, um die Motorleistung des Antriebsmotors bei hohen Drehzahlen nutzen zu können.

Eine Weiterbildung besteht dahingehend auch darin, dass im ersten Motorsteuerungs-Datensatz Parameter der Motorsteuerung hinterlegt sind, um das Kennlinienfeld des Antriebsmotors so zu ändern, dass dieser zur Abgabe maximaler Spitzenleistung konfiguriert wird. Bei einer Verbrennungskraftmaschine wird das Leistungs- bzw. Drehmoment-Kennlinienfeld u.a. von Parametern wie dem Einspritzzeitpunkt, Ladedruck, ggf. dem Zündzeitpunkt, etc. beeinflusst. Bei einem Elektromotor bestimmt vorrangig das Erregerfeld die Motorkennlinie. Bei einer Einsatzfahrt kann vorgesehen sein, den Antriebsmotor in einem Betriebsbereich zu betreiben, der hinsichtlich Kraftstoff- bzw. Energieverbrauch und Verschleiß nachteilig ist, was zugunsten der höheren Leistung, und damit einem früheren Erreichen des Einsatzortes, in Kauf genommen wird.

Nach einer Weiterbildung ist vorgesehen, dass im zweiten Motorsteuerungs-Datensatz Parameter der Motorsteuerung hinterlegt sind, um das Kennlinienfeld des Antriebsmotors so zu ändern, dass dieser zur Abgabe kontinuierlicher Dauerleistung bei möglichst konstanter Drehzahl konfiguriert wird. Im Gegensatz zur Einsatzfahrt kommt es beim Einsatz darauf an, möglichst lange die Einsatzbereitschaft aufrecht zu erhalten und vor allem während des Einsatzes, die Einsatzparameter konstant zu halten. Ein Einsatzaggregat kann bspw. durch eine Löschmittelpumpe gebildet sein, die eine möglichst konstante Antriebsdrehzahl benötigt, um zuverlässig Löschmittel an der/den Entnahmestellen bereit zu stellen. Druck- bzw. Volumensschwankungen aufgrund schwankender Löschmittelentnahme an einer Entnahmestelle soll zuverlässig ausgeregelt werden, sodass die Druckverhältnisse an anderen Entnahmestellen davon weitestgehend unbeeinflusst bleiben. Das Einsatzaggregat kann aber auch durch eine Drehleiter gebildet sein, welche zumeist hydraulisch angetrieben/betrieben wird. Hier ist es von entscheidender Bedeutung, dass die Hydraulikpumpe den gesamten Einsatz zuverlässig in Betrieb bleibt und einen konstanten Druck im Hydrauliksystem aufrechterhält.

Bei der Einsatzfahrt wird das voll gerüstete und damit noch schwere Einsatzfahrzeug schnell bewegt, sodass sich Störungen im Fahrbelag bzw. hintereinanderliegende Lenkbewegungen summieren, und zu einem instabilen Fahrverhalten führen können. Daher ist nach einer Weiterbildung vorgesehen, dass die Aufhängvorrichtung bzw. die Niveauregulierung kinematischen Sensoren und Stellglieder aufweist, wobei im ersten Aufhängungssteuerungs-Datensatz Parameter der Niveauregulierung hinterlegt sind, sodass eine hoch-dynamische Niveauregulierungs-Kennlinie konfiguriert wird. Insbesondere wird die Dämpfung sehr hart eingestellt, was zwar zu Lasten des Fahrkomforts geht, andererseits jedoch Schwank- und Neigbewegungen reduzieren kann. Außerhalb der Einsatzfahrt bieten die Einsatzfahrzeuge einen zumeist hohen Federkomfort, da die zugrundeliegenden Fahrzeugchassis, zumeist für komfortables Fahren über längere Strecken ausgelegt sind.

Eine Weiterbildung besteht auch darin, dass von einem Winkelsensor ein Lenkeinschlag erfasst wird, und von der Niveauregulierung zur Bildung der Niveauregulierungs-Kennlinie ausgewertet wird. Ein Vorteil für die Fahrstabilität ergibt sich auch, wenn die Niveauregulierung einer kommenden Schwenkbewegung entgegenwirken kann. Aufgrund der großen Masse des Einsatzfahrzeugs und der damit verbundenen Zeitverzögerung zwischen Lenkbewegung und Reaktion der Masse, kann es durch eine Folge von Lenkbewegungen zu einem gefährlichen Aufschaukeln kommen, was mit der gegenständlichen Ausführung verhindert werden kann.

Zur Erhöhung der Fahrsicherheit, insbesondere bei Fahrten mit hoher Geschwindigkeit, ist es von Vorteil, wen das Einsatzfahrzeug ein Navigationssystem mit einem Datenausgang aufweist, über welchen Datenausgang, Kennwerte des unmittelbaren Fahrwegs an die Niveauregulierung übermittelt werden, und von dieser zur Bildung der Niveauregulierungs-Kennlinie ausgewertet werden. Damit kann die Niveauregulierung eine Anpassung der Voreinstellung realisieren, sodass eine zu erwartende Seitneigung des Fahrzeugs aufgrund der nächsten Kurve bereits im Voraus kompensiert werden kann, bspw. in dem das Fahrzeug bereits am Kurveneingang leicht in Richtung Kurveninnenseite geneigt werden kann.

Insbesondere soll mit den beiden vorherigen Weiterbildungen eine proaktive Anpassung der Niveauregulierung bzw. der Niveauregulierungs-Kennlinie erreicht werden, um eine unmittelbar bevorstehende fliehkraftbedingte Schräglage des Fahrzeugs zu verringern. Es ist insbesondere nicht vorgesehen, dass die Schräglage ausgeregelt wird, da dies zu einem instabilen Verhalten führen kann, wenn Fahrer und Niveauregulierung gleichzeitig Korrekturen durchführen. Es soll lediglich eine Vorverstellung bspw. eines Federelements erfolgen. Diese Vorverstellung wird nach Eintritt des Ereignisses sofort deaktiviert, um die ursprüngliche Fahrdynamik wiederherzustellen.

Aufgrund gesetzlicher Vorgaben und zur Sicherheit anderer Verkehrsteilnehmer ist es von Vorteil, wenn im ersten Signalisierungs-Datensatz Parameter hinterlegt sind, wodurch die Signalisierungs- und Lichtabgabevorrichtung optische und akustische Signalmittel aktiviert. Beispielsweise können bzw. müssen bei einer Einsatzfahrt Blaulicht, Folgetonhorn und/oder Fernlichtschaltung aktiviert werden, um andere Verkehrsteilnehmer auf das Einsatzfahrzeug aufmerksam zu machen.

Am Einsatzort sind hinsichtlich der Absicherung des Fahrzeugs und der Umgebung mehrere Aktionen erforderlich. Daher ist nach einer Weiterbildung vorgesehen, dass im zweiten Signalisierungs-Datensatz Parameter hinterlegt sind, wodurch die Signalisierungs- und Lichtabgabevorrichtung Leuchtmittel am Fahrzeug aktiviert, um zumindest einen Bereich aus der Gruppe des unmittelbaren Fahrzeugbereichs, der Fahrzeug-Zu- bzw. Ausstiege, Geräteschächte, des fahrzeug-nahen Einsatzbereichs zu beleuchten. An einem nicht vertrauten Einsatzort besteht für die Mannschaft beim Aussteigen aus dem Fahrzeug die Gefahr, dass sie über versteckte oder schlecht sichtbare Hindernisse stolpern und sich verletzen können. Daher ist es von Vorteil, wenn möglichst schnell eine ausreichende Beleuchtung des Umfelds des Fahrzeugs gewährleistet ist. Der Fahrer kann daher bereits bei Erreichen des Einsatzorts alle Schritte einleiten, dass ein sofortiger und gesicherter Einsatzbeginn möglich ist.

Da sich ein Einsatzort auch in einem Bereich befinden kann, wo andere Verkehrsteilnehmer unterwegs sind, ist nach einer Weiterbildung vorgesehen, dass im zweiten Signalisierungs-Datensatz Parameter hinterlegt sind, wodurch die Signalisierungs- und Lichtabgabevorrichtung Signalmittel zur Verkehrsleitung aktiviert. Zur Eigensicherung des Fahrzeugs und zum Warnen anderer Verkehrsteilnehmer ist es von Vorteil, wenn der Fahrer bereits kurz vor dem Erreichen des Einsatzorts durch Wahl der zweiten Betriebsart, die entsprechenden Warneinrichtungen aktivieren kann.

In einer Ausführung eines Feuerwehrfahrzeugs dient der Antriebsmotor am Einsatzort auch als Antrieb für ein Löschsystem. Daher ist nach einer Weiterbildung vorgesehen, dass im ersten Einsatzaggregat-Datensatz Parameter einer Steuerung des Löschsystems hinterlegt sind, wodurch von dieser Steuerung Stellmittel aktiviert werden, wodurch eine Löschmittelpumpe des Einsatzaggregats an den Antriebsmotor gekoppelt wird.

In einer weiteren möglichen Ausführung des Feuerwehrfahrzeugs ist als Antrieb des Einsatzaggregats ein eigeständiger Antriebsmotor vorgesehen. Dementsprechend besteht eine Weiterbildung darin, dass im ersten Einsatzaggregat-Datensatz Parameter einer Steuerung des Einsatzaggregats hinterlegt sind, wodurch von dieser Steuerung ein Aggregat-Antriebsmotor gestartet wird.

Eine Weiterbildung besteht auch darin, dass in der zweiten Betriebsart von der Betriebsartensteuerung Mittel aktiviert werden, um den Zugang zu Geräteschächten bzw. Einsatzmittel freizugeben. Einsatzgerätschaft ist zumeist in Geräteschächten angeordnet, die gegen unbefugten Zugriff bzw. ein versehentliches Öffnen gesichert sind. Hierzu kann vorgesehen sein, dass die, die Geräteschächte verschließenden Rollläden automatisch hochgefahren werden. Gerade mit Schutzhandschuhen kann das Entriegeln von Rollladenverschlüssen in der Einsatzhektik schwierig sein und so zu unnötigen Stress führen. Auch kann gemäß dieser Weiterbildung vorgesehen sein, dass bei einem Löschfahrzeug, Löschmittel am Einsatzort bereits freigegeben sind, sodass diese bei Bedarf unmittelbar bereitstehen. Somit lässt sich wieder die Zeit bis zum Erreichen der Einsatzbereitschaft verkürzen.

Eine Weiterbildung sieht auch vor, dass in der ersten oder zweiten Betriebsart von der Betriebsartensteuerung ein Synchronisations-Datensatz in ein Kommunikationssystem des Einsatzfahrzeugs geladen und aktiviert wird. Am Weg zum bzw. am Einsatzort kann es vorkommen, dass mit Einsatzfahrzeugen anderer Organisationen zu kommunizieren ist. Dies erfordert oft die Einstellung mehrerer Kommunikationsmittel, was den Fahrer deutlich ablenken kann. Auch entfällt durch diese Weiterbildung eine evtl. erforderliche Suche nach hinterlegten Kommunikatioonsparameter.

Eine Weiterbildung nach der in der zweiten Betriebsart vom Kommunikationssystem ein lokales drahtloses Kommunikationsnetzwerk aufgebaut wird hat den Vorteil, dass den Einsatzkräften ein von den örtlichen Gegebenheiten unabhängiges Kommunikationsnetzwerk, zur Sprach-, Daten- evtl. Videokommunikation zur Verfügung steht.

Einsatzkräfte können die aktuelle Situation vor Ort nicht für jeden Einsatzort kennen, bzw. ist in der Vorbereitung meist zu wenig Zeit dafür verfügbar. Daher ist es von Vorteil, wenn vom Kommunikationssystem eine Datenverbindung zu einem kommunalen und/oder einem privaten Einsatzdatennetzwerk hergestellt wird, wobei die Zugangsberechtigungen aus dem Synchronisations-Datensatz extrahiert werden. Somit können die Einsatzkräfte auf Pläne und lokale Überwachungseirichtungen etc. zugreifen und sich so ein deutlich umfassenderes Bild der Lage am Einsatzort schaffen.

Bevorzugt wird das Kommunikationssystem durch ein am Einsatzfahrzeug vorhandenes, oder für das Einsatzfahrzeug optional verfügbares Einsatzmanagement System gebildet. Ein solches System, bspw. EMEREC wie es von der Anmelderin verfügbar ist, unterstützt eine Bündelung einsatzrelevanter Information und stellt diese Information zentral auf einer Mehrzahl möglicher Anzeigemittel dar. Beispielsweise auf einem Anzeigemittel in der Fahrerkabine, einem Smartphone, oder einem Tablett, welches vom Einsatzleiter mitgeführt werden kann.

Eine Weiterbildung besteht auch darin, dass im ersten und/oder zweiten Aufhängungssteuerungs-Datensatz Null-Positionswerte der Aufhängvorrichtung hinterlegt sind, welche bei Wahl der ersten und/oder zweiten Betriebsart aus dem Speichermittel an die Aufhängvorrichtung übertragen werden. Zur Erreichung einer stabilen Straßenlage bei einer Einsatzfahrt mit hoher Geschwindigkeit ist es von Vorteil, wenn die Fahrzeugkarosserie etwas abgesenkt wird, um u.a. den Schwerpunkt zu senken und dadurch ggf. kritische Federwege zu reduzieren. In der zweiten Betriebsart am Einsatzort bzw. kann es bspw. von Vorteil sein, das Fahrzeug ganz abzusenken (Wegfall des gesamten Federwegs), um den Einsatzkräften ein einfacheres Erreichen der fahrzeugoberen Elemente zu ermöglichen. Es kann aber auch vorgesehen sein, dass eine nicht waagrecht ausgerichtete Fahrzeug-Standfläche am Einsatzort durch Anpassung der Null-Position der Aufhängvorrichtung kompensiert wird und somit eine möglichst waagrechte Ausrichtung des Einsatzfahrzeugs gewährleistet ist.

Nach einer weiteren Ausbildung ist vorgesehen, dass die aus dem Speichermittel ausgelesenen Betriebsdatensätze auf einem Anzeigemittel der Betriebsartensteuerung angezeigt werden, und vor der Übertragung an die Zielsysteme vom Bediener mittels eines Eingabemittels individuell angepasst werden. Die Betriebsdatensätze sind derart gestaltet, dass sie für beinahe alle Anwendungsfälle optimiert sind. Da jedoch eine Anpassung an alle möglichen Anwendungsfälle möglich ist, ist gemäß dieser Weiterbildung vorgesehen, dass der Bediener einzelne Parameter manuell anpassen kann. Die vorgewählten Betriebsdatensätze werden dem Bediener bspw. auf einem Flachbildschirm, bevorzugt im Blickbereich, dargestellt, wobei der Bediener dann über Wahlfelder einzelne Werte gezielt beeinflussen kann.

Eine Weiterbildung besteht ferner darin, dass die Betriebsdatensätze einen geschützten Bereich aufweisen, in welchem vom Hersteller Grenzparameter hinterlegt werden. Der Vorteil der gegenständlichen Ausführung liegt darin, dass vom Hersteller des Einsatzfahrzeugs, Betriebsdatensätze bereitgestellt werden können, die so parametriert wurden, dass das Einsatzfahrzeug für den jeweiligen Betriebsmodus bestmöglich konfiguriert wurde. Bestmöglich dahingehend, da der Hersteller die Grenzparameter des Einsatzfahrzeugs am besten kennt und diese Grenzparameter aus Gründen der Betriebssicherheit vom Kunden bzw. Bediener einzuhalten sind. Individuelle Anpassungen durch den Kunden bzw. Bediener sind innerhalb der Grenzparameter natürlich möglich.

In eine ähnliche Richtung geht auch eine Weiterbildung, nach der Betriebsdatensätze einen geschützten Bereich aufweisen, in welchem vom Hersteller Einsatzparameter hinterlegt werden. Mittels Einsatzparameter lässt sich eine grundsätzliche Einsatzkonfiguration festlegen. Beispielsweise werden Betriebsdatensätze für eine Stadtfeuerwehr anders parametriert sein, als für eine Landfeuerwehr in einer gebirgigen Gegend. Als nicht abschließendes Beispiel wird bei einer Stadtfeuerwehr ein Allradantrieb nur bedarfsweise aktiviert sein, während dieser bei einer Gebirgsfeuerwehr ab Einsatzbeginn aktiviert sein wird. Ein weiterer Vorteil dieser Ausführung liegt darin, dass sich dadurch eine universelle Plattform eines Feuerwehrfahrzeugs (das ausgerüstete Fahrzeug) für eine Mehrzahl unterschiedlicher Einsatzarten individuell und vor allem auch für Kunden individuell konfigurieren lässt. Insbesondere ist dies möglich, ohne dafür Umbauten am Fahrzeug vornehmen zu müssen. Als nicht abschließendes und nicht einschränkendes Beispiel kann eine Betriebsfeuerwehr genannt werden, bei der es aus Gründen der Betriebssicherheit gefordert ist, dass das Einsatzfahrzeug in jeden Betriebsmodus eine Kommunikationsverbindung zu einer Leitstelle aufrecht halten muss. Zum besseren Verständnis der Erfindung wird diese anhand der nachfolgenden Figuren näher erläutert.

Es zeigen jeweils in stark vereinfachter, schematischer Darstellung:
- Fig. 1: ein Einsatzfahrzeug in einer möglichen Ausführung als Löschfahrzeug, zur Durchführung des gegenständlichen Verfahrens;
- Fig. 2: ein schematisches Flussdiagramm zur Darstellung der ablaufenden Verfahrens-schritte.

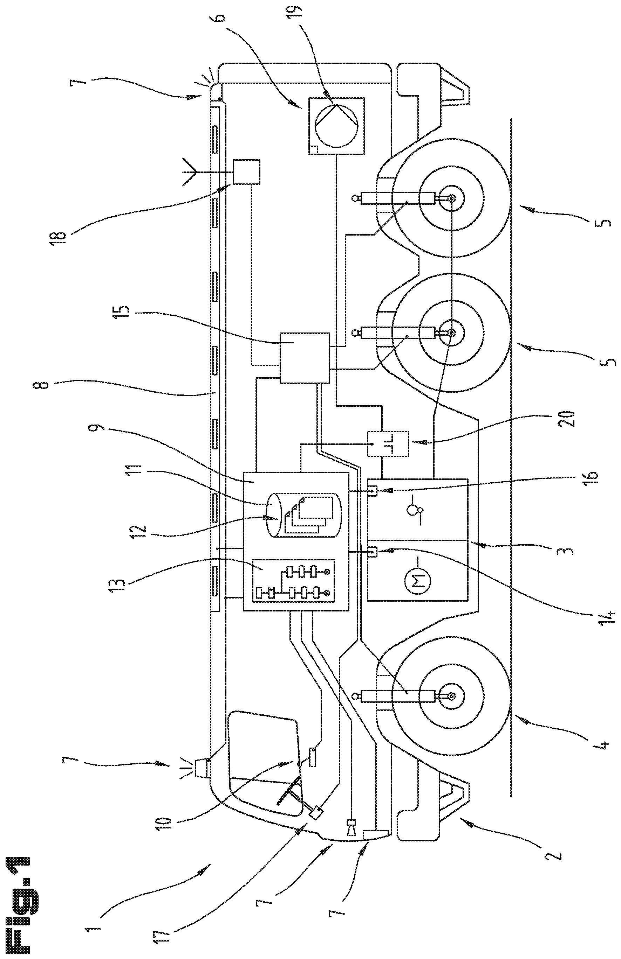

Fig. 1 zeigt ein Einsatzfahrzeug 1, welches eine Fahrzeugkarosserie 2, eine Antriebseinheit 3, zumindest ein Vorderradpaar 4 und zumindest ein Hinterradpaar 5 aufweist. Ferner ist zumindest ein Einsatzaggregat 6, eine Signalisierungsvorrichtung 7 und eine Lichtabgabevorrichtung 8 vorhanden. Ferner ist eine Betriebsartensteuerung 9 vorhanden, welche einen Betriebsartenwahlschalter 10 und ein Speichermittel 11 aufweist, wobei im Speichermittel 11 Betriebsdatensätze 12 hinterlegt sind. Von einer Ablaufsteuerung 13 der Betriebsartensteuerung 9 werden entsprechend der durch den Betriebsartenwahlschalter 10 gewählten Betriebsart, Betriebsdatensätze 12 aus dem Speichermittel 11 ausgelesen und an eine Motorsteuerung 14, an eine Niveauregulierung 15 der Aufhängvorrichtung, an die Signalisierungs- 7 und Lichtabgabevorrichtung 8 und an das Einsatzaggregat 6 übertragen. Je nach gewählter Betriebsart können einige, oder alle zuvor angeführten Betriebsdatensätze 12 übertragen werden. Nach Übertragung der Betriebsdatensätze 12 werden diese von der Betriebsartensteuerung 9 aktiviert, sodass die einzelnen Systeme, insbesondere die Signalisierungs- 7 und Lichtabgabevorrichtung 8, die Niveauregulierung 15, die Getriebesteuerung 16, das Einsatzaggregat 6, insbesondere eine Steuerung eines Löschsystems oder eines Hydrauliksystems, diese Betriebsdaten übernehmen und fortan die jeweils zugeordneten Systeme entsprechend der übermittelten Betriebsdaten bzw. Betriebsparameter betreiben.

Gemäß einer weiteren Ausführung ist vorgesehen, dass von einem Winkelsensor 17 ein Lenkeinschlag erfasst wird, und von der Niveauregulierung 15 zur Bildung der Niveauregulierungskennlinie ausgewertet wird. Ebenfalls nach einer weiteren Ausführung ist vorgesehen, dass ein Navigationssystem 18 vorhanden ist, welches über einen Datenausgang Kennwerte des unmittelbaren Fahrwegs an die Niveauregulierung 15 übermittelt, welche von dieser bei der Bildung der Niveauregulierungskennlinie berücksichtigt.

In einer ersten Betriebsart, welcher einer Einsatzfahrt entspricht, ist es von Bedeutung, dass das Einsatzfahrzeug 1 andere Straßenverkehrsteilnehmer auf die Einsatzfahrt aufmerksam macht. Diesbezüglich ist vorgesehen, dass die Signalisierungsvorrichtung 7 beispielsweise ein Warnlicht, insbesondere ein Blaulicht, ist, welches von anderen Verkehrsteilnehmern besonders gut wahrgenommen wird. Die Signalisierungsvorrichtung 7 kann aber auch durch eine Lichthupenfunktion der Fahrzeugbeleuchtung gebildet sein, indem das Hauptlicht der Fahrzeugbeleuchtung zyklisch zwischen Abblend- und Fernlicht umgeschaltet wird. Ebenso kann vorgesehen sein, dass die Signalisierungsvorrichtung 7 durch ein Folgetonhorn gebildet ist, welches sich aufgrund seiner Lautstärke und Frequenzlage deutlich vom Umgebungslärm abhebt. Beim Erreichen des Einsatzortes, also in der zweiten Betriebsart, ist es von Bedeutung, dass der unmittelbare Einsatzort um das Einsatzfahrzeug 1 beleuchtet ist, sodass der im Einsatzfahrzeug 1 mitfahrenden Mannschaft ein gefahrloses Aussteigen ermöglicht wird. Daher ist gemäß einer Ausführung vorgesehen, dass von der Betriebsartensteuerung 9 eine Lichtabgabevorrichtung 8 aktiviert wird, welche beispielsweise eine Mehrzahl einzelner Leuchten aufweist.

Ebenfalls von Vorteil ist, wenn beim Erreichen des Einsatzortes einsatzrelevante Komponenten, wie beispielsweise das Einsatzaggregat 6, bereits für den Einsatz vorbereitet werden. Gemäß einer Ausführung kann vorgesehen sein, dass das Einsatzaggregat 6 eine Löschmittelpumpe 19 aufweist, welche über eine Kupplung 20 an die Antriebseinheit 3 gekoppelt wird. Gemäß einer weiteren, nicht dargestellten Ausführung ist auch möglich, dass das Einsatzaggregat 6 eine eigene Antriebseinheit aufweist, welcher in der zweiten Betriebsart aufgrund der Parameter im relevanten Betriebsdatensatz 12 gestartet wird.

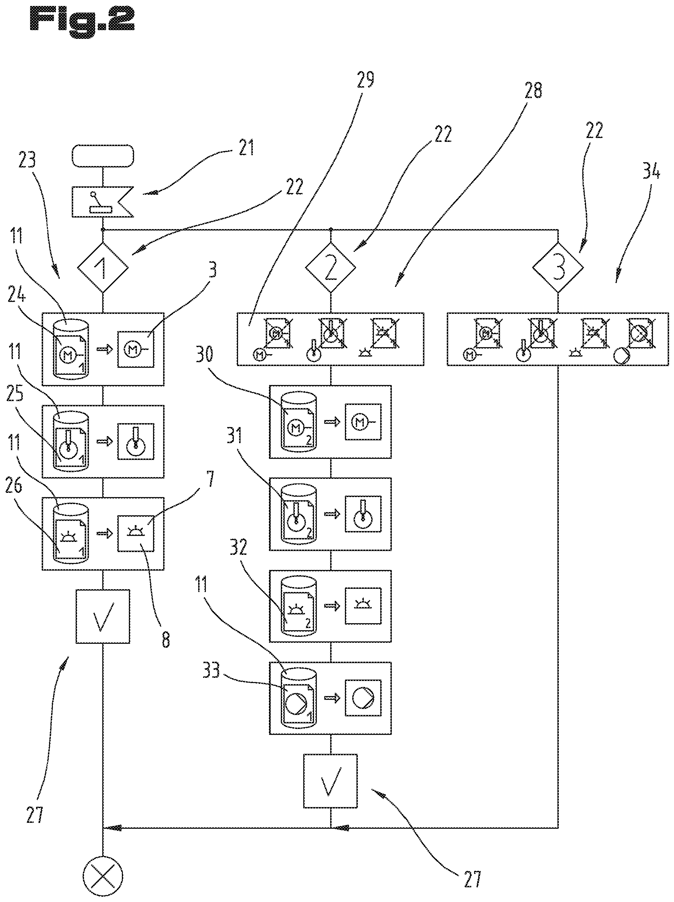

Fig. 2 zeigt eine schematische Ablaufdarstellung des gegenständlichen Betriebsverfahrens. Mit dem Betriebsartenwahlschalter wird in einem ersten Schritt 21 die gewünschte Betriebsart ausgewählt. In einem Vergleichsschritt 22 wird von der Betriebsartensteuerung, insbesondere der Ablaufsteuerung, ermittelt, welche Betriebsart gewählt wurde.

Bei Wahl der ersten Betriebsart 23, welche einer Einsatzfahrt entspricht, wird von der Ablaufsteuerung der Betriebsartensteuerung ein erster Motorsteuerungs-Datensatz 24 aus dem Speichermittel 11 ausgelesen und an die Antriebseinheit 3 übertragen, insbesondere an die Motorsteuerung. Ebenso wird ein erster Aufhängungssteuerungs-Datensatz 25 aus dem Speichermittel ausgelesen und an die Aufhängvorrichtung bzw. die Niveauregulierung 15 übertragen. Ebenso wird ein erster Signalisierungs-Datensatz 26 aus dem Speichermittel 11 an die Signalisierungs- 7 bzw. Lichtabgabevorrichtung 8 übertragen.

Nachdem die Betriebsdatensätze übertragen wurden, werden diese aktiviert 27, wodurch die einzelnen Steuerungsmodule, beispielsweise die Motorsteuerung, die Getriebesteuerung, etc. die Parameter aus den Betriebsdatensätzen auslesen und Stellelemente, Regelglieder, Steuerungssätze und dergleichen entsprechend parametrieren.

Wurde im ersten Schritt 21 die zweite Betriebsart 28 ausgewählt, werden als erstes die übertragenen Betriebsdatensätze der ersten Betriebsart deaktiviert 29. Die folgenden drei Schritte entsprechen jenen der ersten Betriebsart 23, wobei nun ein zweiter Motorsteuerungs-Datensatz 30, ein zweiter Aufhängungssteuerungs-Datensatz 31 und ein zweiter Signalisierungs-Datensatz 32 aus dem Speichermittel 11 an das entsprechende Steuerungsmodul übertragen wird.

Da die zweite Betriebsart 28 dem Einsatzmodus entspricht, wird auch ein erster Einsatzaggregat-Datensatz 33 aus dem Speichermittel 11 an das Einsatzaggregat 6 übertragen. Gemäß der in Fig. 1 dargestellten Ausführung, ist das Einsatzaggregat 6 durch ein Löschsystem mit einer Löschmittelpumpe 19 gebildet. Es ist beispielhaft auch möglich, dass das Einsatzaggregat durch eine zumeist hydraulisch betriebene Drehleiter gebildet ist.

Im Einsatzfall kann es erforderlich sein, dass das Einsatzgebiet großflächig beleuchtet wird. Daher kann die Lichtabgabevorrichtung 8 auch einen ausfahrbaren Mast umfassen, der aufgrund der Parameter im zweiten Signalisierungs-Datensatz 32 ausgefahren wird und die daran angeordneten Leuchtmittel aktiviert werden.

Nachdem die Betriebsdatensätze 12 an die jeweiligen Steuerungseinheiten übertragen wurden, werden diese gleichbedeutend wie in der vorherigen ersten Betriebsart 23 aktiviert 27.

Nach Beendigung des Einsatzes wird vom Einsatzleiter bzw. Fahrer des Einsatzfahrzeuges die dritte Betriebsart 34 gewählt, in der die übertragenen Betriebsdatensätze deaktiviert werden. Bevorzugt wird die dritte Betriebsart 34 nach Beendigung des Einsatzfalles gewählt, es ist jedoch auch möglich, dass die dritte Betriebsart 34 direkt aus der ersten Betriebsart 23 gewählt wird, beispielsweise wenn ein Einsatz nicht mehr erforderlich ist.

In der Fig. 2 nicht dargestellt ist die Möglichkeit, dass die vorgewählten Betriebsdatensätze an einem Anzeigemittel der Betriebsartensteuerung angezeigt, und vom Bediener mittels einer Eingabevorrichtung individuell angepasst werden.

Der besondere Vorteil des gegenständlichen Betriebsverfahrens liegt nun darin, dass dem Fahrer eines Einsatzfahrzeuges bzw. einem mitfahrenden Einsatzleiter, eine Vielzahl an durchzuführenden Konfigurationsaufgaben abgenommen wird und automatisiert in der korrekten Reihenfolge durchgeführt werden. Insbesondere werden diese Aufgaben ohne zusätzliche erforderliche Interaktion abgearbeitet, sodass sich der Einsatzfahrer bzw. der Einsatzleiter voll und ganz auf den bevorstehenden Einsatz vorbereiten kann. Eine manuelle Übersteuerung der Automatik ist jedoch ebenfalls vorgesehen. Ferner ist mit dem gegenständlichen Betriebsverfahren gewährleistet, dass auch in der Hektik eines Einsatzes, Konfigurationseinstellungen vollständig und in der richtigen Reihenfolge durchgeführt werden. Mit dem gegenständlichen Betriebsverfahren wird eine deutliche Entlastung der Einsatzkräfte erreicht, was insbesondere das Risiko einer Eigen- bzw. Fremdgefährdung deutlich reduziert.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Einsatzfahrzeug | 30 | zweiter Motorsteuerungs-Daten-satz |
| 2 | Fahrzeugkarosserie | | |
| 3 | Antriebseinheit | 31 | zweiter Aufhängungssteuerungs-Datensatz |
| 4 | Vorderradpaar | | |
| 5 | Hinterradpaar | 32 | zweiter Signalisierungs-Datensatz |
| 6 | Einsatzaggregat | 33 | erster Einsatzaggregat-Datensatz |
| 7 | Signalisierungsvorrichtung | 34 | dritte Betriebsart |
| 8 | Lichtabgabevorrichtung | | |
| 9 | Betriebsartensteuerung | | |
| 10 | Betriebsartenwahlschalter | | |
| 11 | Speichermittel | | |
| 12 | Betriebsdatensätze | | |
| 13 | Ablaufsteuerung | | |
| 14 | Motorsteuerung | | |
| 15 | Niveauregulierung | | |
| 16 | Getriebesteuerung | | |
| 17 | Winkelsensor | | |
| 18 | Navigationssystem | | |
| 19 | Pumpe | | |
| 20 | Kupplung | | |
| 21 | erster Schritt | | |
| 22 | Vergleichsschritt | | |
| 23 | erste Betriebsart | | |
| 24 | erster Motorsteuerungs-Datensatz | | |
| 25 | erster Aufhängungssteuerungs-Datensatz | | |
| 26 | erster Signalisierungs-Datensatz | | |
| 27 | Aktivierung | | |
| 28 | zweite Betriebsart | | |
| 29 | Deaktivierung | | |

## Patentansprüche

1. Betriebsverfahren für ein Einsatzfahrzeug (1), insbesondere ein Feuerwehrfahrzeug,
welches Einsatzfahrzeug (1)
eine Fahrzeugkarosserie (2),
eine Antriebseinheit (3), mit zumindest einem Antriebsmotor und einer Motorsteuerung (14),
zumindest ein Vorderradpaar (4) und zumindest ein Hinterradpaar (5),
zumindest ein Einsatzaggregat (6),
und eine Signalisierungs- (7) und Lichtabgabevorrichtung (8) aufweist,
wobei
das Vorderradpaar (4) und das Hinterradpaar (5) jeweils über eine Aufhängvorrichtung mit einer Niveauregulierung (15) mit der Fahrzeugkarosserie (2) verbunden ist,
und wobei zumindest das Hinterradpaar (5) mit dem Antriebsmotor verbunden ist,
und wobei das Einsatzaggregat (6) mit dem Antriebsmotor verbunden ist, oder einen Aggregat-Antriebsmotor aufweist,
umfassend
ferner eine Betriebsartensteuerung (9), welche einen Betriebsartenwahlschalter (10) mit mehreren wählbaren Betriebsarten und ein Speichermittel (11) mit darin hinterlegten Betriebsdatensätzen (12) aufweist,
**dadurch gekennzeichnet, dass**
von einer Ablaufsteuerung (13) der Betriebsartensteuerung (9)
• bei Wahl einer ersten Betriebsart (23), welche einer Einsatzfahrt entspricht,
ein erster Motorsteuerungs-Datensatz (24) aus dem Speichermittel (11) an die Motorsteuerung (14) übertragen wird, und
ein erster Aufhängungssteuerungs-Datensatz (25) aus dem Speichermittel (11) an die Aufhängvorrichtung übertragen wird, und
ein erster Signalisierungs-Datensatz (26) aus dem Speichermittel (11) an die Signalisierungs- (7) und Lichtabgabevorrichtung (8) übertragen wird, und
die übertragenen Datensätze aktiviert werden;
und dass
• bei Wahl einer zweiten Betriebsart (28), welche einem Einsatzmodus entspricht,
die übertragenen Datensätze der ersten Betriebsart (23) deaktiviert werden, und
ein zweiter Motorsteuerungs-Datensatz (30) aus dem Speichermittel (11) an die Motorsteuerung (14) übertragen wird, und
ein zweiter Aufhängungssteuerungs-Datensatz (31) aus dem Speichermittel (11) an die Aufhängvorrichtung übertragen wird, und
ein zweiter Signalisierungs-Datensatz (32) aus dem Speichermittel (11) an die Signalisierungs- (7) und Lichtabgabevorrichtung (8) übertragen wird, und
ein erster Einsatzaggregat-Datensatz (33) an das Einsatzaggregat (6) übertragen wird, und die übertragenen Datensätze aktiviert werden;
und dass
• bei Wahl einer dritten Betriebsart (34), welche einem Standard-Betriebsmodus entspricht, die übertragenen Datensätze der ersten, zweiten, oder ggf. weiteren Betriebsart deaktiviert werden.

2. Betriebsverfahren nach Anspruch 1, wobei das Hinterradpaar (5) über ein Getriebe mit dem Antriebsmotor verbunden ist, **dadurch gekennzeichnet, dass** in der ersten Betriebsart (23) ein erster Getriebesteuerungs-Datensatz aus dem Speichermittel (11) an eine Getriebesteuerung (16) übertragen wird.

3. Betriebsverfahren nach Anspruch 1 oder 2, **dadurch gekennzeichnet, dass** im ersten Motorsteuerungs-Datensatz Parameter der Motorsteuerung (14) hinterlegt sind, um das Kennlinienfeld des Antriebsmotors so zu ändern, dass dieser zur Abgabe maximaler Spitzenleistung konfiguriert wird.

4. Betriebsverfahren nach Anspruch 1 oder 2, **dadurch gekennzeichnet, dass** im zweiten Motorsteuerungs-Datensatz Parameter der Motorsteuerung (14) hinterlegt sind, um das Kennlinienfeld des Antriebsmotors so zu ändern, dass dieser zur Abgabe kontinuierlicher Dauerleistung bei möglichst konstanter Drehzahl konfiguriert wird.

5. Betriebsverfahren nach einem der Ansprüche 1 bis 4, **dadurch gekennzeichnet, dass** die Aufhängvorrichtung bzw. die Niveauregulierung (15) kinematischen Sensoren und Stellglieder aufweist, wobei im ersten Aufhängungssteuerungs-Datensatz Parameter der Niveauregulierung (15) hinterlegt sind, sodass eine hoch-dynamische Niveauregulierungs-Kennlinie konfiguriert wird.

6. Betriebsverfahren nach Anspruch 5, **dadurch gekennzeichnet, dass** von einem Winkelsensor (17) ein Lenkeinschlag erfasst wird, und von der Niveauregulierung (15) zur Bildung der Niveauregulierungs-Kennlinie ausgewertet wird.

7. Betriebsverfahren nach Anspruch 5 oder 6, **dadurch gekennzeichnet, dass** das Einsatzfahrzeug (1) ein Navigationssystem (18) mit einem Datenausgang aufweist, über welchen Datenausgang, Kennwerte des unmittelbaren Fahrwegs an die Niveauregulierung (15) übermittelt werden, und von dieser zur Bildung der Niveauregulierungs-Kennlinie ausgewertet werden.

8. Betriebsverfahren nach einem der Ansprüche 1 bis 7, **dadurch gekennzeichnet, dass** im ersten Signalisierungs-Datensatz Parameter hinterlegt sind, wodurch die Signalisierungs- (7) und Lichtabgabevorrichtung (8) optische und akustische Signalmittel aktiviert.

9. Betriebsverfahren nach einem der Ansprüche 1 bis 8, **dadurch gekennzeichnet, dass** im zweiten Signalisierungs-Datensatz Parameter hinterlegt sind, wodurch die Signalisierungs- (7) und Lichtabgabevorrichtung (8) Leuchtmittel aktiviert, um zumindest einen Bereich aus der Gruppe des unmittelbaren Fahrzeugbereichs, der Fahrzeug-Zu- bzw. Ausstiege, Geräteschächte, des fahrzeugnahen Einsatzbereichs zu beleuchten.

10. Betriebsverfahren nach einem der Ansprüche 1 bis 9, **dadurch gekennzeichnet, dass** im zweiten Signalisierungs-Datensatz Parameter hinterlegt sind, wodurch die Signalisierungs- (7) und Lichtabgabevorrichtung (8) Signalmittel zur Verkehrsleitung aktiviert.

11. Betriebsverfahren nach einem der Ansprüche 4 bis 10, **dadurch gekennzeichnet, dass** im ersten Einsatzaggregat-Datensatz Parameter einer Steuerung des Einsatzaggregats (6) hinterlegt sind, wodurch von dieser Steuerung Stellmittel aktiviert werden, wodurch eine Löschmittelpumpe (19) des Einsatzaggregats (6) an den Antriebsmotor gekoppelt wird.

12. Betriebsverfahren nach einem der Ansprüche 1 bis 10, **dadurch gekennzeichnet, dass** im ersten Einsatzaggregat-Datensatz Parameter einer Steuerung des Einsatzaggregats (6) hinterlegt sind, wodurch von dieser Steuerung ein Aggregat-Antriebsmotor gestartet wird.

13. Betriebsverfahren nach einem der Ansprüche 1 bis 12, **dadurch gekennzeichnet, dass** in der zweiten Betriebsart (28) von der Betriebsartensteuerung (9) Mittel aktiviert werden, um den Zugang zu Geräteschächten bzw. Einsatzmittel freizugeben.

14. Betriebsverfahren nach einem der Ansprüche 1 bis 13, **dadurch gekennzeichnet, dass** in der ersten (23) oder zweiten Betriebsart (28) von der Betriebsartensteuerung (9) ein Synchronisations-Datensatz in ein Kommunikationssystem des Einsatzfahrzeugs (1) geladen und aktiviert wird.

15. Betriebsverfahren nach Anspruch 14, **dadurch gekennzeichnet, dass** in der zweiten Betriebsart vom Kommunikationssystem ein lokales drahtloses Kommunikationsnetzwerk aufgebaut wird.

16. Betriebsverfahren nach Anspruch 14 oder 15, **dadurch gekennzeichnet, dass** vom Kommunikationssystem eine Datenverbindung zu einem kommunalen und/oder einem privaten Einsatzdatennetzwerk hergestellt wird, wobei die Zugangsberechtigungen aus dem Synchronisations-Datensatz extrahiert werden.

17. Betriebsverfahren nach einem der Ansprüche 1 bis 16, **dadurch gekennzeichnet, dass** im ersten und/oder zweiten Aufhängungssteuerungs-Datensatz Null-Positionswerte der Aufhängvorrichtung hinterlegt sind, welche bei Wahl der ersten (23) und/oder zweiten Betriebsart (28) aus dem Speichermittel (11) an die Aufhängvorrichtung übertragen werden.

18. Betriebsverfahren nach einem der Ansprüche 1 bis 17, **dadurch gekennzeichnet, dass** die aus dem Speichermittel (11) ausgelesenen Betriebsdatensätze (12) auf einem Anzeigemittel der Betriebsartensteuerung (9) angezeigt werden, und vor der Übertragung an die Zielsysteme vom Bediener mittels eines Eingabemittels individuell anpassbar sind.

19. Betriebsverfahren nach einem der Ansprüche 1 bis 18, **dadurch gekennzeichnet, dass** die Betriebsdatensätze (12) einen geschützten Bereich aufweisen, in welchem vom Hersteller Grenzparameter hinterlegt werden.

20. Betriebsverfahren nach einem der Ansprüche 1 bis 19, **dadurch gekennzeichnet, dass** Betriebsdatensätze (12) einen geschützten Bereich aufweisen, in welchem vom Hersteller Einsatzparameter hinterlegt werden.

## Claims

1. An operating method for an emergency vehicle (1), in particular a fire engine,
which emergency vehicle (1) comprises
a vehicle body (2),
a drive unit (3) with at least one drive motor and one motor controller (14),
at least one pair of front wheels (4) and at least one pair of rear wheels (5),
at least one emergency aggregate (6),
and a signaling device (7) and the illuminating device (8),
wherein
the pair of front wheels (4) and the pair of rear wheels (5) are each joined to the vehicle body (2) via a suspension device having a level-regulating system (15),
and wherein at least the pair of rear wheels (5) is connected to the drive motor,
and wherein the emergency aggregate (6) is connected to the drive motor or has an aggregate drive motor,
comprising
furthermore, a mode-of-operation controller (9), which has a mode-of-operation selector switch (10) having multiple manually selectable modes of operation and a memory means (11) having operating-data sets (12),
**characterized in that**
by a sequence controller (13) of the mode-of-operation controller (9)
• upon selection of a first mode of operation (23), which corresponds to an emergency trip,
a first motor-control data set (24) is transmitted from the memory means (11) to the motor controller (14), and
a first suspension-control data set (25) is transmitted from the memory means (11) to the suspension device, and
a first signaling data set (26) is transmitted from the memory means (11) to the signaling device (7) and the illuminating device (8), and
the transmitted data sets are activated;
and that
• upon selection of a second mode of operation (28), which corresponds to an emergency mode,
the transmitted data sets of the first mode of operation (23) are deactivated, and
a second motor-control data set (30) is transmitted from the memory means (11) to the motor controller (14), and
a second suspension-control data set (31) is transmitted from the memory means (11) to the suspension device, and
a second signaling data set (32) is transmitted from the memory means (11) to the signaling device (7) and the illuminating device (8), and
a first emergency aggregate data set (33) is transmitted to the emergency aggregate (6), and
the transmitted data sets are activated;
and that
• upon selection of a third mode of operation (34), which corresponds to a standard mode of operation,
the transmitted data sets of the first, second or, if applicable, further mode of operation are deactivated.

2. The operating method according to claim 1, wherein the pair of rear wheels (5) is connected to the drive motor via a gearbox, **characterized in that**, in the first mode of operation (23), a first gearbox-control data set is transmitted from the memory means (11) to a gearbox controller (16).

3. The operating method according to claim 1 or 2, **characterized in that**, in the first motor-control data set, parameters of the motor controller (14) are stored in order to change the set of characteristic curves of the drive motor in such a way that it is configured to deliver maximum peak power.

4. The operating method according to claim 1 or 2, **characterized in that**, in the second motor-control data set, parameters of the motor controller (14) are stored in order to change the set of characteristic curves of the drive motor in such a way that it is configured to deliver continuous steady power at the most constant possible rotational speed.

5. The operating method according to one of claims 1 to 4, **characterized in that** the suspension device or the level-regulating system (15) has kinematic sensors and actuators, wherein parameters of the level-regulating system (15) are stored in the first suspension-control data set, so that a highly dynamic level-regulating characteristic is configured.

6. The operating method according to claim 5, **characterized in that** a steering lock is detected by an angle sensor (17) and evaluated by the level-regulating system (15) for formation of the level-regulating characteristic.

7. The operating method according to claim 5 or 6, **characterized in that** the emergency vehicle (1) has a navigation system (18) having a data output, via which data output characteristic values of the immediate driving route are communicated to the level-regulating system (15) and evaluated by it for formation of the level-regulating characteristic.

8. The operating method according to one of claims 1 to 7, **characterized in that** parameters, whereby the signaling device (7) and the illuminating device (8) activate optical and acoustic signaling means, are stored in the first signaling data set.

9. The operating method according to one of claims 1 to 8, **characterized in that** parameters, whereby the signaling device (7) and the illuminating device (8) activate illuminating means, are stored in the second signaling data set, in order to illuminate at least one region from the group comprising the immediate vehicle region, the accesses and exits of the vehicle, equipment shafts, or the emergency region close to the vehicle.

10. The operating method according to one of claims 1 to 9, **characterized in that** parameters, whereby the signaling device (7) and the illuminating device (8) activate signaling means for traffic control, are saved in the second signaling data set.

11. The operating method according to one of claims 4 to 10, **characterized in that** parameters of a controller of the emergency aggregate (6), whereby actuating means are activated by this controller, whereby an extinguishing-agent pump (19) of the emergency aggregate (6) is coupled to the drive motor, are stored in the first emergency-aggregate data set.

12. The operating method according to one of claims 1 to 10, **characterized in that** parameters of a controller of the emergency aggregate (6), whereby an aggregate drive motor is started by this controller, are stored in the first emergency-aggregate data set.

13. The operating method according to one of claims 1 to 12, **characterized in that**, in the second mode of operation (28), means are activated by the mode-of-operation controller (9) in order to release access to equipment shafts and/or emergency resources.

14. The operating method according to one of claims 1 to 13, **characterized in that**, in the first (23) or second (28) mode of operation, a synchronization data set is loaded and activated by the mode-of-operation controller (9) in a communication system of the emergency vehicle (1).

15. The operating method according to claim 14, **characterized in that**, in the second mode of operation, a local wireless communication network is established by the communication system.

16. The operating method according to claim 14 or 15, **characterized in that** a data link to a public and/or a private emergency data network is established by the communication system, wherein the access authorizations are extracted from the synchronization data set.

17. The operating method according to one of claims 1 to 16, **characterized in that**, in the first and/or second suspension-control data set, null-position values of the suspension device are sored that are transmitted from the memory means (11) to the suspension device upon selection of the first (23) and/or second (28) mode of operation.

18. The operating method according to one of claims 1 to 17, **characterized in that** the operating-data sets (12) read out of the memory means (11) are displayed on a display means of the operating-data controller (9) and, prior to the transmission to the target systems, are individually adapted by the operator by way of an input means.

19. The operating method according to one of claim 1 to 18, **characterized in that** the operating-data sets (12) have a protected area, in which limit parameters are saved by the manufacturer.

20. The operating method according to one of claim 1 to 19, **characterized in that** the operating-data sets (12) have a protected area, in which emergency parameters are stored by the manufacturer.

## Revendications

1. Procédé de fonctionnement pour un véhicule d'intervention (1), plus particulièrement un véhicule de lutte contre les incendies,
ce véhicule d'intervention (1) comprenant
une carrosserie de véhicule (2),
une unité d'entraînement (3), avec au moins un moteur d'entraînement et une commande de moteur (14),
au moins une paire de roues avant (4) et au moins une paire de roues arrière (5),
au moins un agrégat d'intervention (6),
et un dispositif de signalisation (7) et d'émission de lumière (8),
dans lequel
la paire de roues avant (4) et la paire de roues arrière (5) sont reliées respectivement par l'intermédiaire d'un dispositif de suspension avec une régulation de niveau (15) avec la carrosserie de véhicule (2),
et dans lequel au moins la paire de roues arrière (5) est reliée avec le moteur d'entraînement,
et dans lequel l'agrégat d'intervention (6) est relié avec le moteur d'entraînement ou comprend un moteur d'entraînement d'agrégat,
comprenant
en outre une commande de mode de fonctionnement (9), qui comprend un commutateur de mode de fonctionnement (10) avec plusieurs modes de fonctionnement sélectionnables et un moyen d'enregistrement (11) avec des ensembles de données de fonctionnement (12) enregistrés à l'intérieur,
**caractérisé en ce que**
par une commande de processus (13) de la commande de mode de fonctionnement (9)
• lors de la sélection d'un premier mode de fonctionnement (23), qui correspond à une marche d'intervention,
un premier ensemble de données de commande de moteur (24) provenant du moyen d'enregistrement (11) est transmis à la commande de moteur (14) et
un premier ensemble de données de commande de suspension (25) provenant du moyen d'enregistrement (11) est transmis au dispositif de suspension et
un premier ensemble de données de signalisation (26) provenant du moyen d'enregistrement (11) est transmis au dispositif de signalisation (7) et d'émission de lumière (8) et
les ensembles de données transmis sont activés ;
et **en ce que**
• lors de la sélection d'un deuxième mode de fonctionnement (28), qui correspond à un mode d'intervention,
les ensembles de données transmis du premier mode de fonctionnement (23) sont désactivés et
un deuxième ensemble de données de commande de moteur (30) provenant du moyen d'enregistrement (11) est transmis à la commande de moteur (14) et
un deuxième ensemble de données de commande de suspension (31) provenant du moyen d'enregistrement (11) est transmis au dispositif de suspension et
un deuxième ensemble de données de signalisation (32) provenant du moyen d'enregistrement (11) est transmis au dispositif de signalisation (7) et d'émission de lumière (8) et
un premier ensemble de données d'agrégat d'intervention (33) est transmis à l'agrégat d'intervention (6) et les ensembles de données transmis sont activés ;
et **en ce que**
• lors de la sélection d'un troisième mode de fonctionnement (34), qui correspond à un mode de fonctionnement standard,
les ensembles de données transmis du premier, du deuxième ou, le cas échéant d'un autre mode de fonctionnement sont désactivés.

2. Procédé de fonctionnement selon la revendication 1, dans lequel la paire de roues arrière (5) est reliée, par l'intermédiaire d'une transmission, avec le moteur d'entraînement, **caractérisé en ce que**, dans le premier mode de fonctionnement (23), un premier ensemble de commande de transmission provenant du moyen d'enregistrement (11) est transmis à une commande de transmission (16).

3. Procédé de fonctionnement selon la revendication 1 ou 2, **caractérisé en ce que**, dans le premier ensemble de données de commande de moteur, sont enregistrés des paramètres de la commande du moteur (14), afin de modifier le champ de courbes caractéristiques du moteur d'entraînement de façon à ce que celui-ci soit configuré pour la production d'une puissance de crête maximale.

4. Procédé de fonctionnement selon la revendication 1 ou 2, **caractérisé en ce que**, dans le deuxième ensemble de données de commande de moteur, sont enregistrés des paramètres de la commande du moteur (14), afin de modifier le champ de courbes caractéristiques du moteur d'entraînement de façon à ce que celui-ci soit configuré pour la production d'une puissance continue avec une vitesse de rotation la plus constante possible.

5. Procédé de fonctionnement selon l'une des revendications 1 à 4, **caractérisé en ce que** le dispositif de suspension respectivement la régulation de niveau (15) comprend des capteurs cinématiques et des organes de réglage, dans lequel, dans le premier ensemble de données de commande de suspension, sont enregistrés des paramètres de la régulation de niveau (15), de façon à ce qu'une courbe caractéristique de régulation de niveau hautement dynamique soit configurée.

6. Procédé de fonctionnement selon la revendication 5, **caractérisé en ce qu'**un capteur d'angle (17) détecte un braquage et la régulation de niveau (15) l'analyse pour la formation d'une courbe caractéristique de régulation de niveau.

7. Procédé de fonctionnement selon la revendication 5 ou 6, **caractérisé en ce que** le véhicule d'intervention (1) comprend un système de navigation (18) avec une sortie de données, par l'intermédiaire de laquelle les valeurs caractéristiques du trajet direct sont transmises à la régulation de niveau (15) et sont analysées pour la formation de la courbe caractéristique de régulation de niveau.

8. Procédé de fonctionnement selon l'une des revendications 1 à 7, **caractérisé en ce que**, dans le premier ensemble de données de signalisation, sont enregistrés des paramètres, par l'intermédiaire desquels le dispositif de signalisation (7) et d'émission de lumière (8) active des moyens de signalisation optiques et acoustiques.

9. Procédé de fonctionnement selon l'une des revendications 1 à 8, **caractérisé en ce que**, dans le deuxième ensemble de données de signalisation, sont enregistrés des paramètres, par l'intermédiaire desquels le dispositif de signalisation (7) et d'émission de lumière (8) active des moyens d'éclairage, afin d'éclairer au moins une zone dans le groupe constitué de la zone immédiate du véhicule, des montées et descentes du véhicule, des compartiments d'appareils, de la zone d'intervention proche du véhicule.

10. Procédé de fonctionnement selon l'une des revendications 1 à 9, **caractérisé en ce que**, dans le deuxième ensemble de données de signalisation, sont enregistrés des paramètres, par l'intermédiaire desquels le dispositif de signalisation (7) et d'émission de lumière (8) active des moyens de signalisation pour la gestion du trafic.

11. Procédé de fonctionnement selon l'une des revendications 4 à 10, **caractérisé en ce que**, dans le premier ensemble de données d'agrégat d'intervention, sont enregistrés des paramètres d'une commande de l'agrégat d'intervention (6), ce qui permet à cette commande d'activer des moyens de réglage, ce qui permet de coupler une pompe à moyen d'extinction (19) de l'agrégat d'intervention (6) au moteur d'entraînement.

12. Procédé de fonctionnement selon l'une des revendications 1 à 10, **caractérisé en ce que**, dans le premier ensemble de données d'agrégat d'intervention, sont enregistrés des paramètres d'une commande de l'agrégat d'intervention (6), ce qui permet à cette commande de démarrer un moteur d'entraînement d'agrégat.

13. Procédé de fonctionnement selon l'une des revendications 1 à 12, **caractérisé en ce que**, dans le deuxième mode de fonctionnement (28), la commande de mode de fonctionnement (9) active des moyens, afin de dégager l'accès aux compartiments des appareils respectivement aux moyens d'intervention.

14. Procédé de fonctionnement selon l'une des revendications 1 à 13, **caractérisé en ce que**, dans le premier (23) ou le deuxième mode de fonctionnement (28), la commande de mode de fonctionnement (9) charge un ensemble de données de synchronisation dans un système de communication du véhicule d'intervention (1) et l'active.

15. Procédé de fonctionnement selon la revendication 14, **caractérisé en ce que**, dans le deuxième mode de fonctionnement, le système de communication établit un réseau de communication sans fil local.

16. Procédé de fonctionnement selon la revendication 14 ou 15, **caractérisé en ce que** le système de communication établit une liaison de données avec un réseau de données d'intervention communal et/ou privé, dans lequel les autorisations d'accès sont extraites de l'ensemble de données de synchronisation.

17. Procédé de fonctionnement selon l'une des revendications 1 à 16, **caractérisé en ce que**, dans le premier et/ou le deuxième ensemble de données de commande de suspension, sont enregistrées des valeurs de position nulles du dispositif de suspension, qui sont transmises du moyen d'enregistrement (11) au dispositif de suspension lors de la sélection du premier (23) et/ou du deuxième mode de fonctionnement (28).

18. Procédé de fonctionnement selon l'une des revendications 1 à 17, **caractérisé en ce que** les ensembles de données de fonctionnement (12) lus dans le moyen d'enregistrement (11) sont affichés sur un moyen d'affichage de la commande de mode de fonctionnement (9) et peuvent être adaptés individuellement par l'opérateur à l'aide d'un moyen d'entrée avant la transmission aux systèmes destinataires.

19. Procédé de fonctionnement selon l'une des revendications 1 à 18, **caractérisé en ce que** les ensembles de données de fonctionnement (12) comprennent une partie protégée dans laquelle des paramètres limites sont enregistrés par le fabricant.

20. Procédé de fonctionnement selon l'une des revendications 1 à 19, **caractérisé en ce que** les ensembles de données de fonctionnement (12) comprennent une partie protégée dans laquelle des paramètres d'intervention sont enregistrés par le fabricant.
